# EUROPEAN PATENT APPLICATION

(11) **EP 4 270 588 A1**
(43) Date of publication of application: **01.11.2023**
(21) Application number: 21910125.0
(22) Date of filing: 25.11.2021
(51) Int. Cl.: H01M 10/18, H01M 50/102, H01M 50/121, H01M 50/184, H01M 50/186, H01M 50/193

(54) **BIPOLAR STORAGE BATTERY AND MANUFACTURING METHOD OF SAME**

(30) Priority: 22.12.2020 JP 2020212733
(71) Applicant: FURUKAWA ELECTRIC CO., LTD., Chiyoda-ku Tokyo 100-8322 (JP); The Furukawa Battery Co., Ltd., Yokohama-shi, Kanagawa-ken 240-0006 (JP)
(72) Inventor: TANAKA, Akira, Tokyo 100-8322 (JP); NAKAJIMA, Yasuo, Tokyo 100-8322 (JP); SUYAMA, Kenichi, Tokyo 100-8322 (JP); TANAKA, Hiroki, Tokyo 100-8322 (JP); FURUKAWA, Jun, Iwaki-shi, Fukushima 972-8501 (JP); NISHIKUBO, Hideo, Iwaki-shi, Fukushima 972-8501 (JP); YAMADA, Keizo, Iwaki-shi, Fukushima 972-8501 (JP); HALAPI, Miklos, 1158 Budapest (HU); MAROSFOI, Botond, 1158 Budapest (HU); GOMBOS, Akos, 1158 Budapest (HU); TATRAI, David, 1158 Budapest (HU); GIDOFALVI-KOVACS, Tenia, 1158 Budapest (HU); VARGA, Zoltan, 1158 Budapest (HU)
(74) Representative: Grünecker Patent- und Rechtsanwälte PartG mbB
(86) International application number: PCT/JP2021/043236
(87) International publication number: WO 2022/137972

(57) **Abstract**

To provide a bipolar battery capable of reliably preventing electrolytic solution leakage out of a cell by means of a simple seal structure. A bipolar battery (100) includes a plurality of cell members (150), and a plurality of frame units (110), (120), (130) respectively forming a plurality of cells (160) respectively incorporating the plurality of cell members (150). The plurality of frame units (110), (120), (130) include the frame units (130), (110) made of a light transmissive resin material and the frame units (110), (120) made of a light absorbing resin material being alternately arranged in a stacking direction of the cell members (150). The frame units (130), (110) made of a light transmissive resin material and the frame units (110), (120) made of a light absorbing resin material adjacent in the stacking direction of the cell members (150) are joined at welded portions (140).

## Description

### Technical Field

The present invention relates to a bipolar battery and a method of manufacturing the same.

### Background Art

In recent years, power generation facilities using natural energy such as sunlight and wind power have been increasing. In such a power generation facility, an amount of power generation cannot be controlled, and thus a power load is leveled using a storage battery. That is, when the amount of power generation is larger than a consumption, a difference is charged into the storage battery, and when the amount of power generation is smaller than a consumption, a difference is discharged from the storage battery. As the above-described storage battery, lead-acid batteries are frequently used from the viewpoint of economic efficiency, safety, and the like, and among them, bipolar (bipolar) lead-acid batteries have been attracting attention from the viewpoint of energy density.

This bipolar lead-acid battery is formed by connecting in series a plurality of cell members assembled by alternately stacking the plurality of cell members, in each of which an electrolyte layer is interposed between a positive electrode having a positive active material layer and a negative electrode having a negative active material layer, and a plurality of frame units made of resin incorporating the cell members.

In this bipolar lead-acid battery, the electrolyte layer constituting the cell member in a cell is impregnated with an electrolytic solution. Therefore, it is necessary to prevent electrolytic solution leakage out of the cell.

For example, a conventional sealed bipolar battery assembly disclosed in PTL 1 is known as a battery assembly having a seal structure for preventing electrolytic solution leakage to the outside.

The sealed bipolar battery assembly disclosed in PTL 1 includes a casing frame in which a first current collector and a second current collector are arranged, and two end caps attached so as to mate with a top and a bottom of the casing frame, and defines an electrolytic solution region by the first current collector, the second current collector, the casing frame, and the end caps.

In order to prevent the electrolytic solution leakage to the outside, a plurality of plastic seals and adhesive seals are placed around each of the first current collector and the second current collector between the casing frame and the end caps, and the casing frame and the end caps are joined by welding joints using hot-plate welding or other welding technology.

### Citation List

### Patent Literature

PTL 1: JP 6571091 B2

### Summary of Invention

### Technical Problem

However, the conventional sealed bipolar battery assembly disclosed in PTL 1 has the following problem.

That is, in a case of the sealed bipolar battery assembly disclosed in PTL 1, as the seal structure for sealing the electrolytic solution leakage to the outside from between the casing frame and the end caps, it is necessary to place the plurality of plastic seals and adhesive seals around each of the first current collector and the second current collector between the casing frame and the end caps, and to join together the casing frame and the end caps by the welding joints using the hot-plate welding or other welding technology, which causes the problem that the seal structure is complicated.

In view of such a problem, an object of the present invention is to provide a bipolar battery and a method of manufacturing the same capable of reliably preventing electrolytic solution leakage out of a cell by means of a simple seal structure.

### Solution to Problem

In order to solve the above-described problem, the present invention provides a bipolar battery having the following configuration.
(1) The bipolar battery includes: a plurality of cell members, each including a positive electrode having a positive active material layer, a negative electrode having a negative active material layer, and an electrolyte layer interposed between the positive electrode and the negative electrode; and a plurality of frame units respectively forming a plurality of cells respectively incorporating the plurality of cell members, cell members adjacent in a stacking direction being electrically connected in series.
(2) The plurality of frame units include a frame unit made of a light transmissive resin material and a frame unit made of a light absorbing resin material being alternately arranged in the stacking direction of the cell members.
(3) The frame unit made of a light transmissive resin material and the frame unit made of a light absorbing resin material adjacent in the stacking direction of the cell members are welded and joined together.

The present invention also provides a method of manufacturing a bipolar battery having the following configuration.
(1) There is provided the method of manufacturing a bipolar battery, the bipolar battery including: a plurality of cell members, each including a positive electrode having a positive active material layer, a negative electrode having a negative active material layer, and an electrolyte layer interposed between the positive electrode and the negative electrode; and a plurality of frame units respectively forming a plurality of cells respectively incorporating the plurality of cell members, cell members adjacent in a stacking direction being electrically connected in series.
(2) The method includes a frame unit arranging step of arranging the plurality of frame units to cause a frame unit made of a light transmissive resin material and a frame unit made of a light absorbing resin material to be alternately arranged in the stacking direction of the cell members.
(3) The method includes a joining step of joining together at a welded portion the frame unit made of a light transmissive resin material and the frame unit made of the light absorbing resin material adjacent in the stacking direction of the cell members, the welded portion being formed by emitting light to pass through the frame unit made of a light transmissive resin material to the frame unit made of a light absorbing resin material, and by causing the frame unit made of a light absorbing resin material and the frame unit made of a light transmissive resin material to be melted and solidified.

### Advantageous Effects of Invention

With the bipolar battery according to the present invention, the plurality of frame units include the frame unit made of a light transmissive resin material and the frame unit made of a light absorbing resin material being alternately arranged in the stacking direction of the cell members. The frame unit made of a light transmissive resin material and the frame unit made of a light absorbing resin material adjacent in the stacking direction of the cell members are welded and joined together. As a result, it is possible to reliably prevent the electrolytic solution leakage out of the cell by means of the simple seal structure.

In addition, since the frame unit made of the light transmissive resin material and the frame unit made of the light absorbing resin material adjacent in the stacking direction of the cell members are welded and joined together, higher airtightness is achieved than that of joining using an adhesive method, and electrolytic solution sealing performance can be further improved. Moreover, since the frame unit made of the light transmissive resin material and the frame unit made of the light absorbing resin material are welded and joined together, burrs are less likely to be generated at a joining place, and a possibility that foreign matter such as burrs generated by joining enters the cell can be avoided.

In addition, with the bipolar battery according to the present invention, the frame unit made of a light transmissive resin material includes a joining surface extending along a direction perpendicular to the stacking direction, and the frame unit made of a light absorbing resin material includes a joining surface extending along the direction perpendicular to the stacking direction, the joining surfaces being welded and joined together. As a result, the joining surfaces of the frame unit made of the light transmissive resin material and the frame unit made of the light absorbing resin material, the joining surfaces extending along the direction perpendicular to the stacking direction, can be welded and joined together, so that it is possible to reliably prevent the electrolytic solution leakage out of the cell.

In addition, with the bipolar battery according to the present invention, the frame unit made of a light transmissive resin material includes a joining surface extending along the stacking direction, and the frame unit made of a light absorbing resin material includes a joining surface extending along the stacking direction, the joining surfaces being welded and joined together. As a result, a width of the joining surface extending along the stacking direction can be made larger than a width of the joining surface extending along the direction perpendicular to the stacking direction, so that a creepage distance of the electrolytic solution leakage out of the cell can be made larger than that in a case of using the joining surface extending along the direction perpendicular to the stacking direction, and electrolytic solution sealing performance can be further improved.

In addition, with the bipolar battery according to the present invention, a resin component of the light transmissive resin material serving as a base material is a thermoplastic resin, and a resin component of the light absorbing resin material serving as a base material is a thermoplastic resin and contains a light absorbing agent. As a result, the frame unit made of the light transmissive resin material, the resin component of the light transmissive resin material serving as the base material being the thermoplastic resin, and the frame unit made of the light absorbing resin material, the resin component of the light absorbing resin material serving as the base material being the thermoplastic resin and containing the light absorbing agent, are welded and joined together, and it is possible to reliably prevent the electrolytic solution leakage out of the cell by means of the simple seal structure.

In addition, with the bipolar battery according to the present invention, the light transmissive resin material uses as a base material a thermoplastic resin exhibiting a transmittance between 50% and 95% inclusive with respect to light having a wavelength selected from a range between 380 nm and 2000 nm inclusive, and the light absorbing resin material contains a light absorbing agent in a thermoplastic resin as a base material, to exhibit an absorbance between 5% and 60% inclusive with respect to light having a wavelength selected from a range between 380 nm and 2000 nm inclusive. As a result, the frame unit made of the light transmissive resin material using as the base material the thermoplastic resin exhibiting the transmittance between 50% and 95% inclusive with respect to the light having the wavelength selected from the range between 380 nm and 2000 nm inclusive, and the frame unit made of the light absorbing resin material containing the light absorbing agent in the thermoplastic resin as the base material so as to exhibit the absorbance between 5% and 60% inclusive with respect to the light having the wavelength selected from the range between 380 nm and 2000 nm inclusive, are welded and joined together, and it is possible to reliably prevent the electrolytic solution leakage out of the cell by means of the simple seal structure.

In addition, with the bipolar battery according to the present invention, the thermoplastic resin contains at least one of an acrylonitrile-butadiene-styrene resin or a polypropylene resin. As a result, the frame unit made of the light transmissive resin material using as the base material the thermoplastic resin containing at least one of the acrylonitrile-butadiene-styrene resin or the polypropylene resin, and the frame unit made of the light absorbing resin material containing the light absorbing agent in the thermoplastic resin containing at least one of the acrylonitrile-butadiene-styrene resin or the polypropylene resin are welded and joined together, and it is possible to reliably prevent the electrolytic solution leakage out of the cell by means of the simple seal structure.

In addition, the bipolar battery according to the present invention is a bipolar lead-acid battery in which the positive electrode has a positive-electrode lead layer and the negative electrode has a negative-electrode lead layer, so that it is possible to reliably prevent the electrolytic solution leakage out of the cell by means of the simple seal structure.

In addition, the method of manufacturing a bipolar battery according to the present invention includes: the frame unit arranging step of arranging the plurality of frame units so as to cause the frame unit made of a light transmissive resin material and the frame unit made of a light absorbing resin material to be alternately arranged in the stacking direction of the cell members; and the joining step of joining together at the welded portion the frame unit made of a light transmissive resin material and the frame unit made of a light absorbing resin material adjacent in the stacking direction of the cell members, the welded portion being formed by emitting the light to pass through the frame unit made of a light transmissive resin material to the frame unit made of a light absorbing resin material, and by causing the frame unit made of a light absorbing resin and the frame unit made of a light transmissive resin to be melted and solidified.

As a result, it is possible to reliably prevent electrolytic solution leakage out of the cell by means of a simple seal method using laser welding and a simple seal structure.

In addition, by joining the frame unit made of the light transmissive resin material and the frame unit made of the light absorbing resin material adjacent in the stacking direction of the cell members at the welded portion by laser welding, higher airtightness is achieved than that of joining using an adhesive method, and electrolytic solution sealing performance can be further improved. Moreover, by joining the frame unit made of the light transmissive resin material and the frame unit made of the light absorbing resin material at the welded portion, burrs are less likely to be generated at a joining place, and a possibility that foreign matter such as burrs generated by joining enters the cell can be avoided.

In addition, with the method of manufacturing a bipolar battery according to the present invention, in the joining step, a joining surface of the frame unit made of a light transmissive resin material, the joining surface extending along a direction perpendicular to the stacking direction, and a joining surface of the frame unit made of a light absorbing resin material, the joining surface extending along the direction perpendicular to the stacking direction, are joined at the welded portion.

As a result, the joining surfaces of the frame unit made of the light transmissive resin material and the frame unit made of the light absorbing resin material, the joining surfaces extending along the direction perpendicular to the stacking direction, are joined at the welded portion by laser welding, so that it is possible to reliably prevent the electrolytic solution leakage out of the cell.

In addition, with the method of manufacturing a bipolar battery according to the present invention, in the joining step, a joining surface of the frame unit made of a light transmissive resin material, the joining surface extending along the stacking direction, and a joining surface of the frame unit made of a light absorbing resin material, the joining surface extending along the stacking direction, are joined at the welded portion. As a result, a width of the joining surface extending along the stacking direction can be made larger than a width of the joining surface extending along the direction perpendicular to the stacking direction, so that a creepage distance of the electrolytic solution leakage out of the cell can be made larger than that in a case of using the joining surface extending along the direction perpendicular to the stacking direction, and the electrolytic solution sealing performance can be further improved.

### Brief Description of Drawings

FIG. 1 is a cross-sectional view illustrating a schematic configuration of a bipolar battery according to a first embodiment of the present invention;
FIG. 2 is a drawing for explaining a joining method of the bipolar battery illustrated in FIG. 1;
FIG. 3 is a cross-sectional view illustrating a schematic configuration of a bipolar battery according to a second embodiment of the present invention; and
FIG. 4 is a drawing for explaining a joining method of the bipolar battery illustrated in FIG. 3.

### Description of Embodiments

Although embodiments of a bipolar battery according to the present invention will be described on the basis of the drawings, the present invention is not limited to the following embodiments described on the basis of the drawings.

### (First Embodiment)

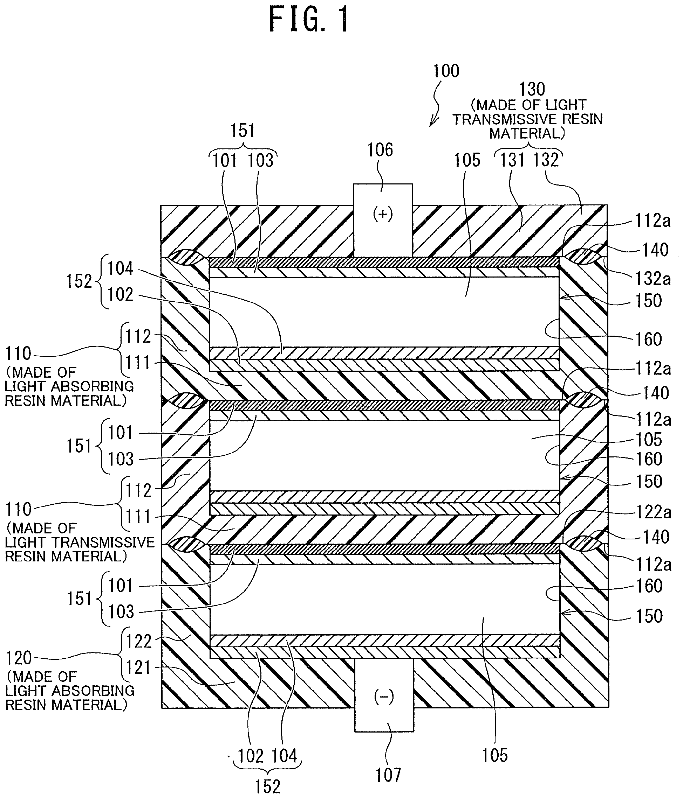

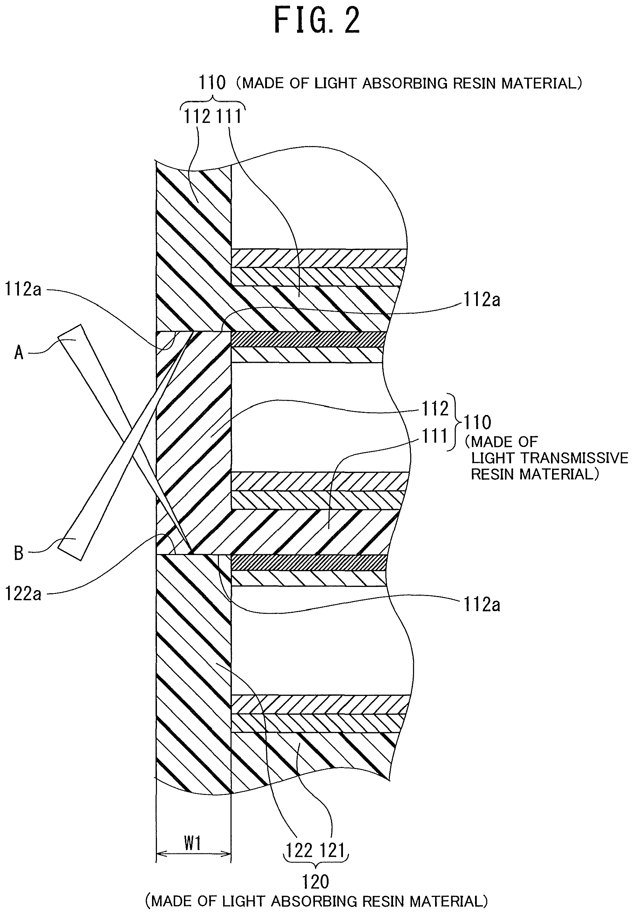

A bipolar battery and a method of manufacturing the same according to a first embodiment of the present invention will be described with reference to FIGS. 1 and 2.

A bipolar (bipolar) storage battery 100 according to the first embodiment of the present invention illustrated in FIG. 1 is a bipolar lead-acid battery in which a positive electrode 151 has a positive-electrode lead layer 101 and a negative electrode 152 has a negative-electrode lead layer 102, and includes a plurality of cell members 150, a plurality of internal frame units (frame units) 110, a first end frame unit (frame unit) 120, and a second end frame unit (frame unit) 130.

The plurality of cell members 150 are arranged to be stacked at intervals in a stacking direction (vertical direction in FIG. 1).

The plurality of internal frame units 110, the first end frame unit 120, and the second end frame unit 130 respectively form a plurality of cells (spaces) 160 respectively incorporating the plurality of cell members 150.

Each of the internal frame units 110 includes a substrate (bipolar plate) 111 having a rectangular planar shape, and a rim 112 having a quadrangular frame shape provided on an outer periphery of the substrate 111. The substrate 111 of each of the internal frame units 110 is arranged between the cell members 150 adjacent in the stacking direction (vertical direction in FIG. 1) of the cell members 150. The rims 112 of the internal frame units 110 respectively include joining surfaces 112a facing each other in the stacking direction (vertical direction in FIG. 1) of the cell members 150 and extending along a direction perpendicular to the stacking direction.

The substrate 111 is integrated with the inside of the rim 112. The substrate 111 is positioned at one end (lower end) of the rim 112 in a thickness direction (vertical direction in FIG. 1) of the rim 112. The rim 112 has a larger thickness than a thickness of the substrate 211.

The first end frame unit 120 includes a first end plate 121 having a rectangular planar shape, and a rim 122 having a quadrangular frame shape provided on an outer periphery of the first end plate 121. The first end frame unit 120 surrounds the negative electrode 152 of the cell member 150 and a side surface of the cell member 150, on one end side (lower end side in FIG. 1) of the bipolar battery 100. The first end plate 121 surrounds the negative electrode 152 of the cell member 150, and the rim 122 surrounds the side surface of the cell member 150.

The first end plate 121 of the first end frame unit 120 is arranged in parallel with the substrates 111 of the internal frame units 110, and the rim 122 is arranged so as to be in contact with the rim 112 of the internal frame unit 110 positioned adjacent thereto. That is, the rim 122 includes a joining surface 122a facing the rim 112 of the internal frame unit 110 in the stacking direction (vertical direction in FIG. 1) of the cell members 150, and extending along the direction perpendicular to the stacking direction. The first end plate 121 has a thickness larger than the thickness of the substrate 111. The rim 122 has a thickness larger than the thickness of the first end plate 121, and the first end plate 121 is integrated with the inside of the rim 122. The first end plate 121 is positioned at one end (lower end) of the rim 122 in a thickness direction (vertical direction in FIG. 1) of the rim 122.

The second end frame unit 130 includes a second end plate 131 having a rectangular planar shape, and a rim 132 having a quadrangular frame shape provided around the second end plate 131. The second end plate 131 is integrated with the inside of the rim 132. The second end frame unit 130 surrounds the positive electrode 151 of the cell member 150 on the other end side (upper end side in FIG. 1) of the bipolar battery 100.

The second end plate 131 is arranged in parallel with the substrates 111 of the internal frame units 110, and the rim 132 is arranged so as to be in contact with the rim 112 of the internal frame unit 110 positioned adjacent thereto. That is, the rim 132 includes a joining surface 132a facing the rim 112 of the internal frame unit 110 in the stacking direction (vertical direction in FIG. 1) of the cell members 150, and extending in the direction perpendicular to the stacking direction.

The second end plate 131 has a thickness larger than the thickness of the substrate 111. The rim 132 has the same thickness as the thickness of the second end plate 131.

The positive-electrode lead layer 101 is disposed on one surface of the substrate 111. The negative-electrode lead layer 102 is disposed on the other surface of the substrate 111. A positive active material layer 103 is disposed on the positive-electrode lead layer 101. A negative active material layer 104 is disposed on the negative-electrode lead layer 102.

An electrolyte layer 105 made of a glass fiber mat or the like impregnated with an electrolytic solution such as sulfuric acid is disposed between the positive active material layer 103 and the negative active material layer 104 facing each other.

The negative-electrode lead layer 102 is disposed on the other surface of the first end plate 121. The negative active material layer 104 is disposed on the negative-electrode lead layer 102 on the first end plate 121. The electrolyte layer 105 made of a glass fiber mat or the like impregnated with an electrolytic solution such as sulfuric acid is disposed between the negative active material layer 104 on the first end plate 121 and the facing positive active material layer 103 of the substrate 211.

The positive-electrode lead layer 101 is disposed on one surface of the second end plate 131. The positive active material layer 103 is disposed on the positive-electrode lead layer 101 on the second end plate 131. The electrolyte layer 105 made of a glass fiber mat or the like impregnated with an electrolytic solution such as sulfuric acid is disposed between the positive active material layer 103 on the second end plate 131 and the facing negative active material layer 104 of the substrate 111.

The negative-electrode lead layer 102 on the first end plate 121 is provided with a negative electrode terminal 107 that is electrically connected with the outside of the first end plate 121. The positive-electrode lead layer 101 on the second end plate 131 is provided with a positive electrode terminal 106 that is electrically connected with the outside of the second end plate 131.

That is, the bipolar battery 100 according to the first embodiment includes: the plurality of cell members 150, each including the positive electrode 151 having the positive active material layer 103, the negative electrode 152 having the negative active material layer 104, and the electrolyte layer 105 interposed between the positive electrode 151 and the negative electrode 152, the plurality of cell members 150 being arranged to be stacked at intervals; and the plurality of frame units (the plurality of internal frame units 110, the first end frame unit 120, and the second end frame unit 130) respectively forming the plurality of cells 160 respectively incorporating the plurality of cell members 150.

The cell members 150 adjacent in the stacking direction are electrically connected in series. Therefore, the substrate 111 interposed between the cell members 150 adjacent in the stacking direction includes means of electrically connecting the positive-electrode lead layer 101 and the negative-electrode lead layer 102.

In the bipolar battery 100 according to the first embodiment, the plurality of frame units (the plurality of internal frame units 110, the first end frame unit 120, and the second end frame unit 130) include a frame unit made of a light transmissive resin material and a frame unit made of a light absorbing resin material being alternately arranged in the stacking direction of the cell members 150.

Specifically, the first end frame unit 120 at one end (lower end in FIG. 1) in the stacking direction (vertical direction in FIG. 1) is a frame unit made of a light absorbing resin, the internal frame unit 110 adjacent to the first end frame unit 120 in the stacking direction is a frame unit made of a light transmissive resin material, the internal frame unit 110 adjacent to the internal frame unit 110 in the stacking direction is a frame unit made of a light absorbing resin material, and the second end frame unit 130 at the other end (upper end in FIG. 1) in the stacking direction is a frame unit made of a light transmissive resin material.

Here, a resin component of the transmissive resin material serving as a base material is a thermoplastic resin, and the thermoplastic resin that exhibits a transmittance between 50% and 95% inclusive with respect to light having a wavelength (approximately between 380 nm and 2000 nm inclusive) selected from a range of visible light (approximately between 380 nm and 780 nm inclusive) and near-infrared light (approximately between 780 nm and 2000 nm inclusive) is used as the base material.

In addition, a resin component of the light absorbing resin material serving as a base material is a thermoplastic resin, and contains a light absorbing agent, and the thermoplastic resin serving as the base material contains the light absorbing agent so as to exhibit an absorbance between 5% and 60% inclusive with respect to light having a wavelength (approximately between 380 nm and 2000 nm inclusive) selected from a range of visible light (approximately between 380 nm and 780 nm inclusive) and near-infrared light (approximately between 780 nm and 2000 nm inclusive).

Examples of the thermoplastic resin applicable as the light transmissive resin material and the light absorbing resin material include ABS resin (acrylonitrile butadiene styrene resin), PC (polycarbonate), PS (polystyrene), PMMA (acrylic resin), COP (cyclic polyolefin), PE (polyethylene), PP (polypropylene), PVC (polyvinyl chloride), PBT (polybutylene terephthalate), POM (polyacetal), and PPS (polyphenylene sulfide), and PP and ABS are particularly preferable.

Although the light transmissive resin material and the light absorbing resin material may use different thermoplastic resins as their base materials, it is preferable to use the same thermoplastic resin because there is no difference in melting point and thermal expansion coefficient, and joining reliability is increased.

As the light absorbing agent, for example, conventionally known dyes, pigments, and the like can be used, and examples thereof include a cyanine compound, a phthalocyanine compound, a dithiol metal complex, a naphthoquinone compound, a diimmonium compound, an azo compound, a naphthalocyanine compound, a nickel dithiolene complex, a squarylium dye, a quinone-based compound, quinacridone, dioxane, benzimidazolone, carbon black, titanium oxide, a ferrite compound such as nickel-iron ferrite, manganese-zinc ferrite, nickel-zinc ferrite, or copper-zinc ferrite, nickel, iron particles, gold particles, and copper particles. One of these components can be used singly, or two or more of them can be used in combination.

In particular, in a case where light (laser beam) in a visible light region (approximately between 380 nm and 780 nm inclusive) is used, for example, a phthalocyanine compound, quinacridone, dioxane, benzimidazolone, titanium oxide, gold particles, copper particles, or the like is preferably applied as the light absorbing agent. In a case where light (laser beam) in a near-infrared region (approximately between 780 nm and 2000 nm inclusive) is used, for example, a phthalocyanine compound, nickel, iron particles, manganese-zinc ferrite, nickel-zinc ferrite, copper-zinc ferrite, titanium oxide, or the like is preferably applied as the light absorbing agent.

As the light absorbing agent, any shape such as a spherical form, a powdery form, or a granular form can be used as well as a particulate form. An average particle size of the light absorbing agent is preferably within a range of approximately 0.01 to 2 um. For measurement of the average particle size, for example, a primary particle size of the light absorbing agent in an observation sample may be measured at a predetermined magnification (for example, 100,000 times) using a transmission electron microscope, and an average value thereof may be used. In a case where the shape of the light absorbing agent is not spherical, a major axis and a minor axis may be measured, and a value calculated by (the sum of the major axis and the minor axis)/2 may be used as the average particle size.

The reason why the plurality of frame units (the plurality of internal frame units 110, the first end frame unit 120, and the second end frame unit 130) include the frame units 130 and 110 made of the light transmissive resin material and the frame units 110 and 120 made of the light absorbing resin material being alternately arranged in the stacking direction of the cell members 150 is as follows. That is, as will be described later, when the frame units adjacent in the stacking direction are joined by laser welding, the frame unit made of the light absorbing resin material and the frame unit made of the light transmissive resin material are melted and solidified by emitting a laser beam to pass through the frame unit made of the light transmissive resin material to the frame unit made of the light absorbing resin material.

In the bipolar battery 100 according to the first embodiment, the frame units 130 and 110 made of the light transmissive resin material and the frame units 110 and 120 made of the light absorbing resin material adjacent in the stacking direction of the cell members 150 are joined at welded portions 140.

Specifically, in order from top to bottom in FIG. 1, the joining surface 132a provided on the rim 132 of the second end frame unit (frame unit made of the light transmissive resin material) 130, the joining surface 132a extending along the direction perpendicular to the stacking direction, and the joining surface 112a provided on the rim 112 of the internal frame unit (frame unit made of the light absorbing resin material) 110 adjacent to the second end frame unit 130 in the stacking direction, the joining surface 112a extending along the direction perpendicular to the stacking direction, are joined at the welded portion 140. The welded portion 140 is formed over an entire periphery of the rims 112 and 132.

In addition, the joining surface 112a provided on the rim 112 of the internal frame unit (frame unit made of the light absorbing resin material) 110, the joining surface 112a extending along the direction perpendicular to the stacking direction, and the joining surface 112a provided on the rim 112 of the internal frame unit (frame unit made of the light transmissive resin material) 110 adjacent to the internal frame unit (frame unit made of the light absorbing resin material) 110 in the stacking direction, the joining surface 112a extending along the direction perpendicular to the stacking direction, are joined at the welded portion 140. The welded portion 140 is formed over an entire periphery of the rims 112 and 112.

Furthermore, the joining surface 112a provided on the rim 112 of the internal frame unit (frame unit made of the light transmissive resin material) 110, the joining surface 112a extending along the direction perpendicular to the stacking direction, and the joining surface 122a provided on the rim 122 of the first end frame unit (frame unit made of the light absorbing resin material) 120 adjacent to the internal frame unit (frame unit made of the light transmissive resin material) 110 in the stacking direction, the joining surface 122a extending along the direction perpendicular to the stacking direction, are joined at the welded portion 140. The welded portion 140 is formed over an entire periphery of the rims 112 and 122.

Here, the respective welded portions 140 are formed by melting and solidifying the frame units 110 and 120 made of the light absorbing resin material and the frame units 130 and 110 made of the light transmissive resin material.

When the bipolar battery 100 is manufactured, particularly, when the frame units 130 and 110 made of the light absorbing resin material and the frame units 110 and 120 made of the light transmissive resin material are joined at the welded portions 140, first, as illustrated in FIGS. 1 and 2, the plurality of frame units (the plurality of internal frame units 110, the first end frame unit 120, and the second end frame unit 130) are arranged to so as cause the frame units made of the light transmissive resin material and the frame units made of the light absorbing resin material to be alternately arranged in the stacking direction of the cell members 150 (a frame unit arranging step).

Specifically, the first end frame unit (frame unit made of the light absorbing resin material) 120, the internal frame unit (frame unit made of the light transmissive resin material) 110, the internal frame unit (frame unit made of the light absorbing resin material) 110, and the second end frame unit (frame unit made of the light transmissive resin material) 130 are arranged in this order from a lower side to an upper side in FIGS. 1 and 2 in the stacking direction.

Next, the frame units 110 and 120 made of the light absorbing resin material, and the frame units 130 and 110 made of the light transmissive resin material are joined together by generating the welded portions 140 by laser welding. That is, as illustrated in FIG. 2, the frame units 130 and 110 made of the light transmissive resin material and the frame units 110 and 120 made of the light absorbing resin material adjacent in the stacking direction of the cell members 150 are joined at the welded portions 140 formed by emitting laser beams to pass through the frame units 130 and 110 made of the light transmissive resin material to the frame units 110 and 120 made of the light absorbing resin material, and by causing the frame units 110 and 120 made of the light absorbing resin material and the frame units 130 and 110 made of the light transmissive resin material to be melted and solidified (a joining step).

Specifically, as illustrated in FIG. 2, a laser beam A is emitted to pass through the internal frame unit (frame unit made of the light transmissive resin material) 110 to the joining surface 122a provided on the rim 122 of the first end frame unit (frame unit made of the light absorbing resin material) 120, the joining surface 122a extending along the direction perpendicular to the stacking direction. As a result, the vicinity of the joining surface 122a of the first end frame unit (frame unit made of the light absorbing resin material) 120, and the vicinity of the joining surface 112a of the internal frame unit (frame unit made of the light transmissive resin material) 110 are melted by generated heat, and cooled and solidified to generate the welded portion 140 (see FIG. 1). Consequently, the vicinity of the joining surface 122a of the first end frame unit (frame unit made of the light absorbing resin material) 120, and the vicinity of the joining surface 112a of the internal frame unit (frame unit made of the light transmissive resin material) 110 are joined at the welded portion 140.

Note that it is preferable that a region irradiated with the laser beam A in the direction perpendicular to the stacking direction is substantially an entire region of a width W1 of each of the joining surfaces 112a and 122a.

Moreover, the laser beam A preferably has a wavelength selected from the range between 380 nm and 2000 nm inclusive (furthermore, between 380 nm and 1200 nm inclusive, and particularly between 380 nm and 500 nm inclusive, and between 1000 nm and 1200 nm inclusive).

In addition, as illustrated in FIG. 2, a laser beam B is emitted to pass through the internal frame unit (frame unit made of the light transmissive resin material) 110 to the joining surface 112a provided on the rim 112 of the internal frame unit 110 (frame unit made of the light absorbing resin material) 110, the joining surface 112a extending along the direction perpendicular to the stacking direction. As a result, the vicinity of the joining surface 112a of the internal frame unit (frame unit made of the light absorbing resin material) 110, and the vicinity of the joining surface 112a of the internal frame unit (frame unit made of the light transmissive resin material) 110 are melted by generated heat, and cooled and solidified to generate the welded portion 140 (see FIG. 1). Consequently, the vicinity of the joining surface 112a of the internal frame unit (frame unit made of the light absorbing resin material) 110, and the vicinity of the joining surface 112a of the internal frame unit (frame unit made of the light transmissive resin material) 110 are joined at the welded portion 140.

Note that it is preferable that a region irradiated with the laser beam B in the direction perpendicular to the stacking direction is substantially an entire region of the width W1 of each of the joining surfaces 112a and 112a similarly to the laser beam A.

Moreover, the laser beam B also preferably has a wavelength selected from the range between 380 nm and 2000 nm inclusive (furthermore, between 380 nm and 1200 nm inclusive, and particularly between 380 nm and 500 nm inclusive, and between 1000 nm and 1200 nm inclusive).

In addition, although not illustrated in the drawings, a laser beam is emitted to pass through the second end frame unit (frame unit made of the light transmissive resin material) 130 to the joining surface 112a provided on the rim 112 of the internal frame unit 110 (frame unit made of the light absorbing resin material) 110, the joining surface 112a extending along the direction perpendicular to the stacking direction. As a result, the vicinity of the joining surface 112a of the internal frame unit (frame unit made of the light absorbing resin material) 110, and the vicinity of the joining surface 132a of the second end frame unit (frame unit made of the light transmissive resin material) 130 are melted by generated heat, and cooled and solidified to generate the welded portion 140 (see FIG. 1). Consequently, the vicinity of the joining surface 112a of the internal frame unit (frame unit made of the light absorbing resin material) 110, and the vicinity of the joining surface 132a of the second end frame unit (frame unit made of the light transmissive resin material) 130 are joined at the welded portion 140.

Note that it is also preferable that a region irradiated with the laser beam in the direction perpendicular to the stacking direction is substantially an entire region of the width W1 of each of the joining surfaces 112a and 132a similarly to the laser beams A and B.

Moreover, the laser beam also preferably has a wavelength selected from the range between 380 nm and 2000 nm inclusive (furthermore, between 380 nm and 1200 nm inclusive, and particularly between 380 nm and 500 nm inclusive, and between 1000 nm and 1200 nm inclusive).

As described above, with the bipolar battery 100 according to the first embodiment, the plurality of frame units (the plurality of internal frame units 110, the first end frame unit 120, and the second end frame unit 130) include the frame units 130 and 110 made of the light transmissive resin material and the frame units 110 and 120 made of the light absorbing resin material being alternately arranged in the stacking direction of the cell members 150.

The frame units 130 and 110 made of the light transmissive resin material and the frame units 110 and 120 made of the light absorbing resin material adjacent in the stacking direction of the cell members 150 are joined at the welded portions 140.

As a result, it is possible to reliably prevent electrolytic solution leakage out of the cells 160 by means of a simple seal structure.

In addition, since the frame units 130 and 110 made of the light transmissive resin material and the frame units 110 and 120 made of the light absorbing resin material adjacent in the stacking direction of the cell members 150 are joined at the welded portions 140, higher airtightness is achieved than that of joining using an adhesive method, and electrolytic solution sealing performance can be further improved. Moreover, since the frame units 130 and 110 made of the light transmissive resin material and the frame units 110 and 120 made of the light absorbing resin material are joined at the welded portions 140, burrs are less likely to be generated at a joining place, and a possibility that foreign matter such as burrs generated by joining enters the cells 160 can be avoided.

In addition, with the bipolar battery 100 according to the first embodiment, the frame units 130 and 110 made of the light transmissive resin material include the joining surfaces 132a and 112a extending along the direction perpendicular to the stacking direction, and the frame units 110 and 120 made of the light absorbing resin material include the joining surfaces 112a and 122a extending along the direction perpendicular to the stacking direction, the joining surfaces being joined at the welded portions 140.

As a result, the joining surfaces 132a and 112a, 112a and 112a, and 112a and 122a of the frame units 130 and 110 made of the light transmissive resin material and the frame units 110 and 120 made of the light absorbing resin material are joined at the welded portions 140, so that it is possible to reliably prevent the electrolytic solution leakage out of the cells 160.

In addition, with the bipolar battery 100 according to the first embodiment, the resin component of the light transmissive resin material serving as the base material is the thermoplastic resin, and the resin component of the light absorbing resin material serving as the base material is the thermoplastic resin and contains the light absorbing agent. As a result, the frame units 130 and 110 made of the light transmissive resin material, the resin component of the light transmissive resin material serving as the base material being the thermoplastic resin, and the frame units 110 and 120 made of the light absorbing resin material, the resin component of the light absorbing resin material serving as the base material being the thermoplastic resin and containing the light absorbing agent, are welded and joined together, and it is possible to reliably prevent the electrolytic solution leakage out of the cells 160 by means of the simple seal structure.

In addition, with the bipolar battery 100 according to the first embodiment, the light transmissive resin material uses as the base material the thermoplastic resin exhibiting the transmittance between 50% and 95% inclusive with respect to the light having the wavelength selected from the range between 380 nm and 2000 nm inclusive, and the light absorbing resin material contains the light absorbing agent in the thermoplastic resin as the base material so as to exhibit the absorbance between 5% and 60% inclusive with respect to the light having the wavelength selected from the range between 380 nm and 2000 nm inclusive. As a result, the frame units 130 and 110 made of the light transmissive resin material using as the base material the thermoplastic resin exhibiting the transmittance between 50% and 95% inclusive with respect to the light having the wavelength selected from the range between 380 nm and 2000 nm inclusive, and the frame units 110 and 120 made of the light absorbing resin material containing the light absorbing agent in the thermoplastic resin as the base material so as to exhibit the absorbance between 5% and 60% inclusive with respect to the light having the wavelength selected from the range between 380 nm and 2000 nm inclusive, are welded and joined together, and it is possible to reliably prevent the electrolytic solution leakage out of the cells 160 by means of the simple seal structure.

In addition, with the bipolar battery 100 according to the first embodiment, the thermoplastic resin contains at least one of the acrylonitrile-butadiene-styrene resin or the polypropylene resin. As a result, the frame units 130 and 110 made of the light transmissive resin material using as the base material the thermoplastic resin containing at least one of the acrylonitrile-butadiene-styrene resin or the polypropylene resin, and the frame units 110 and 120 made of the light absorbing resin material containing the light absorbing agent in the thermoplastic resin containing at least one of the acrylonitrile-butadiene-styrene resin or the polypropylene resin are welded and joined together, and it is possible to reliably prevent the electrolytic solution leakage out of the cells 160 by means of the simple seal structure.

In addition, the method of manufacturing the bipolar battery 100 according to the first embodiment of the present invention includes the frame unit arranging step of arranging the plurality of frame units (the plurality of internal frame units 110, the first end frame unit 120, and the second end frame unit 130) so as to cause the frame units 130 and 110 made of the light transmissive resin material and the frame units 110 and 120 made of the light absorbing resin material to be alternately arranged in the stacking direction of the cell members 150. The method also includes the joining step of joining together at the welded portions 140 the frame units 130 and 110 made of the light transmissive resin material and the frame units 110 and 120 made of the light absorbing resin material adjacent in the stacking direction of the cell members 150, the welded portions 140 being formed by emitting the laser beams to pass through the frame units 130 and 110 made of the light transmissive resin material to the frame units 110 and 120 made of the light absorbing resin material, and by causing the frame units 110 and 120 made of the light absorbing resin material and the frame units 130 and 110 made of the light transmissive resin material to be melted and solidified.

As a result, it is possible to reliably prevent electrolytic solution leakage out of the cells 160 by means of a simple seal method using laser welding and a simple seal structure.

In addition, by joining the frame units 130 and 110 made of the light transmissive resin material and the frame units 110 and 120 made of the light absorbing resin material adjacent in the stacking direction of the cell members 150 at the welded portions 140 by laser welding, higher airtightness is achieved than that of joining using an adhesive method, and electrolytic solution sealing performance can be further improved. Moreover, by joining the frame units 130 and 110 made of the light transmissive resin material and the frame units 110 and 120 made of the light absorbing resin material at the welded portions 140, burrs are less likely to be generated at a joining place, and a possibility that foreign matter such as burrs generated by joining enters the cells can be avoided.

In addition, with the method of manufacturing the bipolar battery 100 according to the first embodiment, in the joining step, the joining surfaces 132a and 112a of the frame units 130 and 110 made of the light transmissive resin material, the joining surfaces 132a and 112a extending along the direction perpendicular to the stacking direction, and the joining surfaces 112a and 122a of the frame units 110 and 120 made of the light absorbing resin material, the joining surfaces 112a and 122a extending along the direction perpendicular to the stacking direction, are joined at the welded portions 140.

As a result, the joining surfaces 132a and 112a, 112a and 112a, and 112a and 122a of the frame units 130 and 110 made of the light transmissive resin material and the frame units 110 and 120 made of the light absorbing resin material are joined at the welded portions 140 by laser welding, so that it is possible to reliably prevent the electrolytic solution leakage out of the cells 160.

### (Second Embodiment)

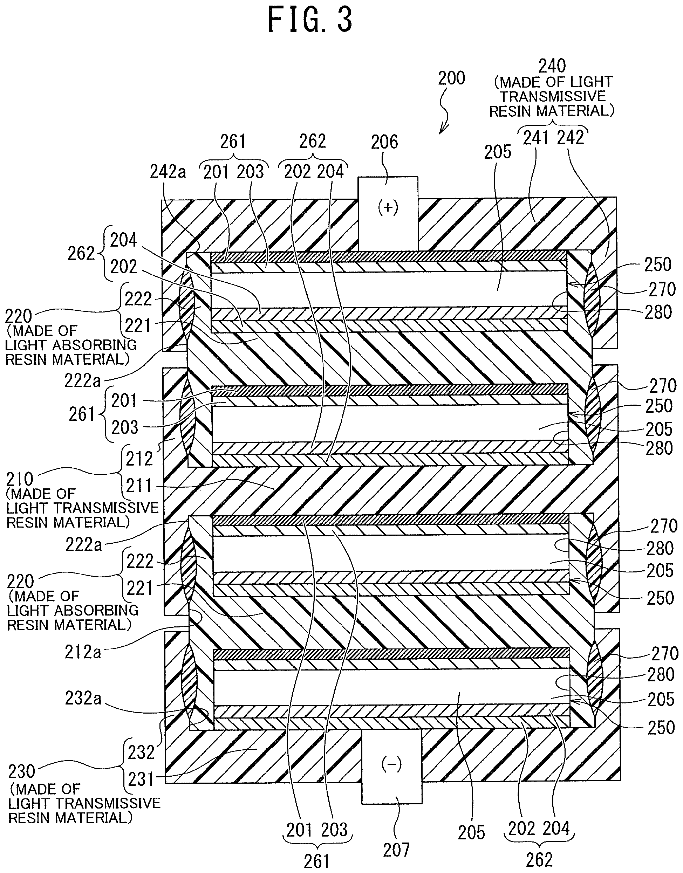

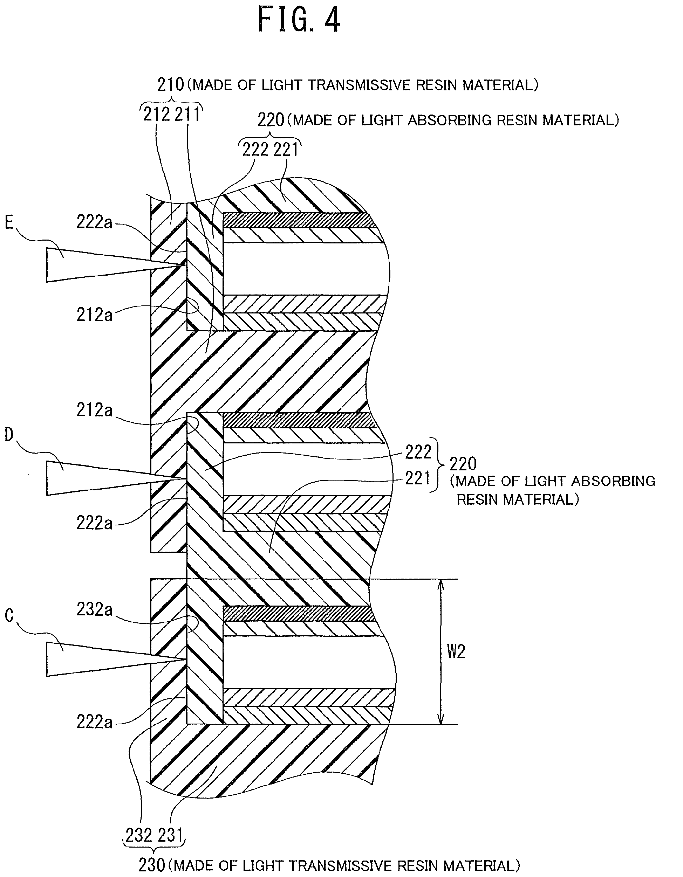

A bipolar battery and a method of manufacturing the same according to a second embodiment of the present invention will be described with reference to FIGS. 3 and 4.

A bipolar (bipolar) storage battery 200 according to the second embodiment of the present invention illustrated in FIG. 3 is a bipolar lead-acid battery in which a positive electrode 261 has a positive-electrode lead layer 201 and a negative electrode 262 has a negative-electrode lead layer 202, and includes a plurality of cell members 250, a first internal frame unit (frame unit) 210, a plurality (two in the present embodiment) of second internal frame units (frame units) 220, a first end frame unit (frame unit) 230, and a second end frame unit (frame unit) 240.

The plurality of cell members 250 are arranged to be stacked at intervals in a stacking direction (vertical direction in FIG. 3).

The first internal frame unit 210, the plurality of second internal frame units 220, the first end frame unit 230, and the second end frame unit 240 respectively form a plurality of cells (spaces) 280 respectively incorporating the plurality of cell members 250.

The first internal frame unit 210 includes a substrate (bipolar plate) 211 having a rectangular planar shape, and a rim 212 having a quadrangular shape provided on an outer periphery of the substrate 211. The substrate 211 is arranged between the cell members 250 adjacent in the stacking direction (vertical direction in FIG. 3) of the cell members 250. The rim 212 is formed thicker than the substrate 211 in the stacking direction, and is formed so as to protrude from a surface on one side (lower side in FIG. 3) and a surface on the other side (upper side in FIG. 3) of the substrate 211 on the quadrangular outer periphery of the substrate 211. The substrate 211 is integrated with the inside of the rim 212. The substrate 211 is positioned in the middle of the rim 212 in a thickness direction (vertical direction in FIG. 3) of the rim 212.

In the present embodiment, the second internal frame units 220 are respectively arranged on one side (lower side in FIG. 3) and the other side of the first internal frame unit 210. Each of the second internal frame units 220 arranged on the one side and the other side of the first internal frame unit 210 is arranged inside the rim 212 of the first internal frame unit 210.

Each of the second internal frame units 220 includes a substrate (bipolar plate) 221 having a rectangular planar shape, and a rim 222 having a quadrangular shape provided on an outer periphery of the substrate 221. The substrate 221 is arranged between the cell members 250 adjacent in the stacking direction (vertical direction in FIG. 3) of the cell members 250. The rim 222 is formed thicker than the substrate 221 in the stacking direction, and is formed so as to protrude from a surface on one side (lower side in FIG. 3) and a surface on the other side (upper side in FIG. 3) of the substrate 221 on the quadrangular outer periphery of the substrate 221. The substrate 221 is integrated with the inside of the rim 222. The substrate 221 is positioned in the middle of the rim 222 in a thickness direction (vertical direction in FIG. 3) of the rim 222. The substrate 221 has substantially the same thickness as the substrate 211 of the first internal frame unit 210.

The rim 222 of the second internal frame unit 220 arranged on the one side of the first internal frame unit 210 is arranged inside the rim 212 protruding from the surface on the one side of the substrate 211 of the first internal frame unit 210. In addition, the rim 222 of the second internal frame unit 220 arranged on the other side of the first internal frame unit 210 is arranged inside the rim 212 protruding from the surface on the other side of the substrate 211 of the first internal frame unit 210.

The rim 212 protruding from the surface on the one side of the substrate 211 of the first internal frame unit 210 and the rim 222 of the second internal frame unit 220 arranged on the one side of the first internal frame unit 210 are arranged so as to be in contact with each other on their side surfaces. The surface of the rim 212 protruding from the surface on the one side of the substrate 211 of the first internal frame unit 210 facing the rim 222 of the second internal frame unit 220 serves as a joining surface 212a. The surface of the rim 222 of the second internal frame unit 220 arranged on the one side of the first internal frame unit 210 facing the rim 212 of the first internal frame unit 210 serves as a joining surface 222a. These joining surfaces 212a and 222a extend along the stacking direction of the cell members 250.

In addition, the rim 212 protruding from the surface on the other side of the substrate 211 of the first internal frame unit 210 and the rim 222 of the second internal frame unit 220 arranged on the other side of the first internal frame unit 210 are arranged so as to be in contact with each other on their side surfaces. The surface of the rim 212 protruding from the surface on the other side of the substrate 211 of the first internal frame unit 210 facing the rim 222 of the second internal frame unit 220 serves as the joining surface 212a. The surface of the rim 222 of the second internal frame unit 220 arranged on the other side of the first internal frame unit 210 facing the rim 212 of the first internal frame unit 210 serves as the joining surface 222a. These joining surfaces 212a and 222a extend along the stacking direction of the cell members 250.

In addition, the first end frame unit 230 includes a first end plate 231 having a rectangular planar shape, and a rim 232 having a quadrangular shape provided on an outer periphery of the first end plate 231. The first end frame unit 230 surrounds the negative electrode 262 of the cell member 250 and a side surface of the second internal frame unit 220 positioned adjacent thereto, on one end side (lower end side in FIG. 3) of the bipolar battery 200. The first end plate 231 surrounds the negative electrode 262 of the cell member 250, and the rim 232 surrounds the side surface of the second internal frame unit 220.

The first end plate 231 has substantially the same thickness as the substrate 221. The rim 232 has a thickness larger than the thickness of the first end plate 231, and the first end plate 231 is integrated with the inside of the rim 232. The first end plate 231 is positioned at one end (lower end) of the rim 222 in a thickness direction (vertical direction in FIG. 3) of the rim 222.

The first end plate 231 of the first end frame unit 230 is arranged in parallel with the substrate 221 of the second internal frame unit 220 positioned adjacent thereto, and the rim 232 is arranged so as to be in contact with the side surface of the rim 222 of the second internal frame unit 220. A surface of the rim 232 of the first end frame unit 230 facing the rim 222 of the second internal frame unit 220 serves as a joining surface 232a. In addition, the surface of the rim 222 of the second internal frame unit 220 facing the rim 232 of the first end frame unit 230 serves as the joining surface 222a. These joining surfaces 232a and 222a extend along the stacking direction of the cell members 150.

In addition, the second end frame unit 240 includes a second end plate 241 having a rectangular planar shape, and a rim 242 having a quadrangular shape provided on an outer periphery of the second end plate 241. The second end frame unit 240 surrounds the positive electrode 261 of the cell member 250 and a side surface of the second internal frame unit 220 positioned adjacent thereto, on the other end side (upper end side in FIG. 3) of the bipolar battery 200. The second end plate 241 surrounds the positive electrode 261 of the cell member 250, and the rim 242 surrounds the side surface of the second internal frame unit 220.

The second end plate 241 has substantially the same thickness as the substrate 221. The rim 242 has a thickness larger than the thickness of the second end plate 241, and the second end plate 241 is integrated with the inside of the rim 242. The second end plate 241 is positioned at the other end (upper end) of the rim 242 in a thickness direction (vertical direction in FIG. 3) of the rim 242.

The second end plate 241 of the second end frame unit 240 is arranged in parallel with the substrate 221 of the second internal frame unit 220 positioned adjacent thereto, and the rim 242 is arranged so as to be in contact with the side surface of the rim 222 of the second internal frame unit 220. A surface of the rim 242 of the second end frame unit 240 facing the rim 222 of the second internal frame unit 220 serves as a joining surface 242a. In addition, the surface of the rim 222 of the second internal frame unit 220 facing the rim 242 of the second end frame unit 240 serves as the joining surface 222a. These joining surfaces 242a and 222a extend along the stacking direction of the cell members 150.

The positive-electrode lead layer 201 is disposed on one surface (lower surface in FIG. 3) of the substrate 211 of the first internal frame unit 210. The negative-electrode lead layer 202 is disposed on the other surface of the substrate 211. A positive active material layer 203 is disposed on the positive-electrode lead layer 201. A negative active material layer 204 is disposed on the negative-electrode lead layer 202.

An electrolyte layer 205 made of a glass fiber mat or the like impregnated with an electrolytic solution such as sulfuric acid is disposed between the positive active material layer 203 and the negative active material layer 204 facing each other.

The positive-electrode lead layer 201 is also disposed on one surface (lower surface in FIG. 1) of the substrate 221 of each of the second internal frame units 220. The negative-electrode lead layer 202 is disposed on the other surface of the substrate 221. A positive active material layer 203 is disposed on the positive-electrode lead layer 201. A negative active material layer 204 is disposed on the negative-electrode lead layer 202.

The electrolyte layer 205 made of a glass fiber mat or the like impregnated with an electrolytic solution such as sulfuric acid is disposed between the positive active material layer 203 and the negative active material layer 204 facing each other.

The negative-electrode lead layer 202 is also disposed on the other surface of the first end plate 231 of the first end frame unit 230. The negative active material layer 204 is disposed on the negative-electrode lead layer 202 of the first end plate 231. The electrolyte layer 205 made of a glass fiber mat or the like impregnated with an electrolytic solution such as sulfuric acid is disposed between the negative active material layer 204 on the first end plate 231 and the facing positive active material layer 203 of the substrate 221.

The positive-electrode lead layer 201 is also disposed on one surface (lower surface in FIG. 3) of the second end plate 241 of the second end frame unit 240. The positive active material layer 203 is disposed on the positive-electrode lead layer 201 on the second end plate 241. The electrolyte layer 205 made of a glass fiber mat or the like impregnated with an electrolytic solution such as sulfuric acid is disposed between the positive active material layer 203 on the second end plate 241 and the facing negative active material layer 204 of the substrate 221.

The negative-electrode lead layer 202 on the first end plate 231 of the first end frame unit 230 is provided with a negative electrode terminal 207 that is electrically connected with the outside of the first end plate 231. The positive-electrode lead layer 201 on the second end plate 241 of the second end frame unit 240 is provided with a positive electrode terminal 206 that is electrically connected with the outside of the second end plate 241.

That is, the bipolar battery 200 according to the second embodiment includes: the plurality of cell members 250, each including the positive electrode 261 having the positive active material layer 203, the negative electrode 262 having the negative active material layer 204, and the electrolyte layer 205 interposed between the positive electrode 261 and the negative electrode 262, the plurality of cell members 250 being arranged to be stacked at intervals; and the plurality of frame units (the first internal frame unit 210, the plurality of second internal frame units 220, the first end frame unit 230, and the second end frame unit 240) respectively forming the plurality of cells 280 respectively incorporating the plurality of cell members 250.

The cell members 250 adjacent in the stacking direction are electrically connected in series. Therefore, the substrates 211 and 221 interposed between the cell members 250 adjacent in the stacking direction include means of electrically connecting the positive-electrode lead layer 201 and the negative-electrode lead layer 202.

In the bipolar battery 200 according to the second embodiment, the plurality of frame units (the first internal frame unit 210, the plurality of second internal frame units 220, the first end frame unit 230, and the second end frame unit 240) include the frame units 240, 210, and 230 made of a light transmissive resin material and the frame units 220 and 220 made of a light absorbing resin material being alternately arranged in the stacking direction of the cell members 250.

Specifically, the first end frame unit 230 at one end (lower end in FIG. 3) in the stacking direction (vertical direction in FIG. 3) is a frame unit made of a light transmissive resin material, the second internal frame unit 220 adjacent to the first end frame unit 230 in the stacking direction is a frame unit made of a light absorbing resin material, the first internal frame unit 210 adjacent to the second internal frame unit 220 in the stacking direction is a frame unit made of a light transmissive resin material, the second internal frame unit 220 adjacent to the first internal frame unit 210 in the stacking direction is a frame unit made of a light absorbing resin material, and the second end frame unit 240 at the other end (upper end in FIG. 3) in the stacking direction is a frame unit made of a light transmissive resin material.

Here, a resin component of the transmissive resin material serving as a base material is a thermoplastic resin, and the thermoplastic resin that exhibits a transmittance between 50% and 95% inclusive with respect to light having a wavelength (approximately between 380 nm and 2000 nm inclusive) selected from a range of visible light (approximately between 380 nm and 780 nm inclusive) and near-infrared light (approximately between 780 nm and 2000 nm inclusive) is used as the base material.

In addition, a resin component of the light absorbing resin material serving as a base material is a thermoplastic resin, and contains a light absorbing agent, and the thermoplastic resin serving as the base material contains the light absorbing agent so as to exhibit an absorbance between 5% and 60% inclusive with respect to light having a wavelength (approximately between 380 nm and 2000 nm inclusive) selected from a range of visible light (approximately between 380 nm and 780 nm inclusive) and near-infrared light (approximately between 780 nm and 2000 nm inclusive).

Examples of the thermoplastic resin applicable as the light transmissive resin material and the light absorbing resin material include ABS resin (acrylonitrile butadiene styrene resin), PC (polycarbonate), PS (polystyrene), PMMA (acrylic resin), COP (cyclic polyolefin), PE (polyethylene), PP (polypropylene), PVC (polyvinyl chloride), PBT (polybutylene terephthalate), POM (polyacetal), and PPS (polyphenylene sulfide), and PP and ABS are particularly preferable.

Although the light transmissive resin material and the light absorbing resin material may use different thermoplastic resins as their base materials, it is preferable to use the same thermoplastic resin because there is no difference in melting point and thermal expansion coefficient, and joining reliability is increased.

As the light absorbing agent, for example, conventionally known dyes, pigments, and the like can be used, and examples thereof include a cyanine compound, a phthalocyanine compound, a dithiol metal complex, a naphthoquinone compound, a diimmonium compound, an azo compound, a naphthalocyanine compound, a nickel dithiolene complex, a squarylium dye, a quinone-based compound, quinacridone, dioxane, benzimidazolone, carbon black, titanium oxide, a ferrite compound such as nickel-iron ferrite, manganese-zinc ferrite, nickel-zinc ferrite, or copper-zinc ferrite, nickel, iron particles, gold particles, and copper particles. One of these components can be used singly, or two or more of them can be used in combination.

In particular, in a case where light (laser beam) in a visible light region (approximately between 380 nm and 780 nm inclusive) is used, for example, a phthalocyanine compound, quinacridone, dioxane, benzimidazolone, titanium oxide, gold particles, copper particles, or the like is preferably applied as the light absorbing agent. In a case where light (laser beam) in a near-infrared region (approximately between 780 nm and 2000 nm inclusive) is used, for example, a phthalocyanine compound, nickel, iron particles, manganese-zinc ferrite, nickel-zinc ferrite, copper-zinc ferrite, titanium oxide, or the like is preferably applied as the light absorbing agent.

As the light absorbing agent, any shape such as a spherical form, a powdery form, or a granular form can be used as well as a particulate form. An average particle size of the light absorbing agent is preferably within a range of approximately 0.01 to 2 um. For measurement of the average particle size, for example, a primary particle size of the light absorbing agent in an observation sample may be measured at a predetermined magnification (for example, 100,000 times) using a transmission electron microscope, and an average value thereof may be used. In a case where the shape of the light absorbing agent is not spherical, a major axis and a minor axis may be measured, and a value calculated by (the sum of the major axis and the minor axis)/2 may be used as the average particle size.

In the bipolar battery 200 according to the second embodiment, the frame units 240, 210, and 230 made of the light transmissive resin material and the frame units 220 and 220 made of the light absorbing resin material adjacent in the stacking direction of the cell members 250 are joined at welded portions 270.

Specifically, in order from top to bottom in FIG. 3, the joining surface 242a provided on the rim 242 of the second end frame unit (frame unit made of the light transmissive resin material) 240, the joining surface 242a extending along the stacking direction, and the joining surface 222a provided on the rim 222 of the second internal frame unit (frame unit made of the light absorbing resin material) 220 adjacent to the second end frame unit 240 in the stacking direction, the joining surface 222a extending along the stacking direction, are joined at the welded portion 270. The welded portion 270 is formed over an entire periphery of the rims 242 and 222.

In addition, the joining surface 222a provided on the rim 222 of the second internal frame unit (frame unit made of the light absorbing resin material) 220, the joining surface 222a extending along the stacking direction, and the joining surface 212a provided on the rim 212 of the first internal frame unit (frame unit made of the light transmissive resin material) 210 adjacent to the second internal frame unit (frame unit made of the light absorbing resin material) 220 in the stacking direction, the joining surface 212a extending along the direction perpendicular to the stacking direction, are joined at the welded portion 270. The welded portion 270 is formed over an entire periphery of the rims 222 and 212.

Furthermore, the joining surface 212a provided on the rim 212 of the first internal frame unit (frame unit made of the light transmissive resin material) 210, the joining surface 212a extending along the stacking direction, and the joining surface 222a provided on the rim 222 of the second internal frame unit (frame unit made of the light absorbing resin material) 220 adjacent to the first internal frame unit (frame unit made of the light transmissive resin material) 210 in the stacking direction, the joining surface 222a extending along the stacking direction, are joined at the welded portion 270. The welded portion 270 is formed over an entire periphery of the rims 212 and 222.

Furthermore, the joining surface 222a provided on the rim 222 of the second internal frame unit (frame unit made of the light absorbing resin material) 220, the joining surface 222a extending along the stacking direction, and the joining surface 232a provided on the rim 232 of the first end frame unit 230 (frame unit made of the light transmissive resin material) 230 adjacent to the second internal frame unit (frame unit made of the light absorbing resin material) 220 in the stacking direction, the joining surface 232a extending along the stacking direction, are joined at the welded portion 270. The welded portion 270 is formed over an entire periphery of the rims 222 and 232.

Here, the respective welded portions 270 are formed by melting and solidifying the frame units 220 and 220 made of the light absorbing resin material and the frame units 240, 210, and 230 made of the light transmissive resin material.

When the bipolar battery 200 is manufactured, particularly, when the frame units made of the light absorbing resin material and the frame units made of the light transmissive resin material are joined at the welded portions 270, first, as illustrated in FIGS. 3 and 4, the plurality of frame units (the first internal frame unit 210, the plurality of second internal frame units 220, the first end frame unit 230, and the second end frame unit 240) are arranged so as to cause the frame units 240, 210, and 230 made of the light transmissive resin material and the frame units 220 and 220 made of the light absorbing resin material to be alternately arranged in the stacking direction of the cell members 250 (a frame unit arranging step).

Specifically, the first end frame unit (frame unit made of the light transmissive resin material) 230, the second internal frame unit (frame unit made of the light absorbing resin material) 220, the first internal frame unit (frame unit made of the light transmissive resin material) 210, the second internal frame unit (frame unit made of the light absorbing resin material) 220, and the second end frame unit (frame unit made of the light transmissive resin material) 240 are arranged in this order from the lower side to the upper side in FIGS. 3 and 4 in the stacking direction.

Next, the frame units made of the light absorbing resin material and the frame units made of the light transmissive resin material are joined together by generating the welded portions 270 by laser welding. That is, as illustrated in FIG. 4, the frame units 240, 210, and 230 made of the light transmissive resin material and the frame units 220 and 220 made of the light absorbing resin material adjacent in the stacking direction of the cell members 250 are joined at the welded portions 270 formed by emitting laser beams to pass through the frame units 240, 210, and 230 made of the light transmissive resin material to the frame units 220 and 220 made of the light absorbing resin material, and by causing the frame units 220 and 220 made of the light absorbing resin material and the frame units 240, 210, and 230 made of the light transmissive resin material to be melted and solidified (a joining step).

Specifically, as illustrated in FIG. 4, a laser beam C is emitted to pass through the first end frame unit (frame unit made of the light transmissive resin material) 230 to the joining surface 222a on the one side provided on the rim 222 of the second internal frame unit (frame unit made of the light absorbing resin material) 220, the joining surface 222a extending along the stacking direction. As a result, the vicinity of the joining surface 222a on the one side of the second internal frame unit (frame unit made of the light absorbing resin material) 220, and the vicinity of the joining surface 232a of the first end frame unit (frame unit made of the light transmissive resin material) 230 are melted by generated heat, and cooled and solidified to generate the welded portion 270 (see FIG. 3). Consequently, the vicinity of the joining surface 222a on the one side of the second internal frame unit (frame unit made of the light absorbing resin material) 220, and the vicinity of the joining surface 232a of the first end frame unit (frame unit made of the light transmissive resin material) 230 are joined at the welded portion 270.

Note that it is preferable that a region irradiated with the laser beam C in the stacking direction is substantially an entire region of a width W2 of each of the joining surfaces 232a and 222a.

Moreover, the laser beam C preferably has a wavelength selected from the range between 380 nm and 2000 nm inclusive (furthermore, between 380 nm and 1200 nm inclusive, and particularly between 380 nm and 500 nm inclusive, and between 1000 nm and 1200 nm inclusive).

In addition, as illustrated in FIG. 4, a laser beam D is emitted to pass through the first internal frame unit (frame unit made of the light transmissive resin material) 210 to the joining surface 222a on the other side provided on the rim 222 of the second internal frame unit (frame unit made of the light absorbing resin material) 220, the joining surface 222a extending along the stacking direction. As a result, the vicinity of the joining surface 222a on the other side of the second internal frame unit (frame unit made of the light absorbing resin material) 220, and the vicinity of the joining surface 212a of the first internal frame unit (frame unit made of the light transmissive resin material) 210 are melted by generated heat, and cooled and solidified to generate the welded portion 270 (see FIG. 3). Consequently, the vicinity of the joining surface 222a on the other side of the second internal frame unit (frame unit made of the light absorbing resin material) 220, and the vicinity of the joining surface 212a of the first internal frame unit (frame unit made of the light transmissive resin material) 210 are joined at the welded portion 270.

Note that it is preferable that a region irradiated with the laser beam D in the direction perpendicular to the stacking direction is substantially an entire region of the width W2 of each of the joining surfaces 222a and 212a similarly to the laser beam C.

Moreover, the laser beam D also preferably has a wavelength selected from the range between 380 nm and 2000 nm inclusive (furthermore, between 380 nm and 1200 nm inclusive, and particularly between 380 nm and 500 nm inclusive, and between 1000 nm and 1200 nm inclusive).

In addition, as illustrated in FIG. 4, a laser beam E is emitted to pass through the first internal frame unit (frame unit made of the light transmissive resin material) 210 to the joining surface 222a on the one side provided on the rim 222 of the other second internal frame unit (frame unit made of the light absorbing resin material) 220, the joining surface 222a extending along the stacking direction. As a result, the vicinity of the joining surface 222a on the one side of the other second internal frame unit (frame unit made of the light absorbing resin material) 220, and the vicinity of the joining surface 212a of the first internal frame unit (frame unit made of the light transmissive resin material) 210 are melted by generated heat, and cooled and solidified to generate the welded portion 270 (see FIG. 3). Consequently, the vicinity of the joining surface 222a on the one side of the other second internal frame unit (frame unit made of the light absorbing resin material) 220, and the vicinity of the joining surface 212a of the first internal frame unit (frame unit made of the light transmissive resin material) 210 are joined at the welded portion 270.

Note that it is preferable that a region irradiated with the laser beam E in the direction perpendicular to the stacking direction is substantially an entire region of the width W2 of each of the joining surfaces 222a and 212a similarly to the laser beam C.

Moreover, the laser beam E also preferably has a wavelength selected from the range between 380 nm and 2000 nm inclusive (furthermore, between 380 nm and 1200 nm inclusive, and particularly between 380 nm and 500 nm inclusive, and between 1000 nm and 1200 nm inclusive).

In addition, although not illustrated in the drawings, a laser beam is emitted to pass through the second end frame unit (frame unit made of the light transmissive resin material) 240 to the joining surface 222a on the other side provided on the rim 222 of the other second internal frame unit (frame unit made of the light absorbing resin material) 220, the joining surface 222a extending along the stacking direction. As a result, the vicinity of the joining surface 222a on the other side of the other second internal frame unit (frame unit made of the light absorbing resin material) 220, and the vicinity of the joining surface 242a of the second end frame unit (frame unit made of the light transmissive resin material) 240 are melted by generated heat, and cooled and solidified to generate the welded portion 270 (see FIG. 3). Consequently, the vicinity of the joining surface 222a on the other side of the other second internal frame unit (frame unit made of the light absorbing resin material) 220, and the vicinity of the joining surface 242a of the second end frame unit (frame unit made of the light transmissive resin material) 240 are joined at the welded portion 270.

Note that it is preferable that a region irradiated with the laser beam in the stacking direction is substantially an entire region of the width W2 of each of the joining surfaces 242a and 222a.

Moreover, the laser beam also preferably has a wavelength selected from the range between 380 nm and 2000 nm inclusive (furthermore, between 380 nm and 1200 nm inclusive, and particularly between 380 nm and 500 nm inclusive, and between 1000 nm and 1200 nm inclusive).

As described above, with the bipolar battery 200 according to the second embodiment, the plurality of frame units (the first internal frame unit 210, the plurality of second internal frame units 220, the first end frame unit 230, and the second end frame unit 240) include the frame units 240, 210, and 230 made of the light transmissive resin material and the frame units 220 and 220 made of the light absorbing resin material being alternately arranged in the stacking direction of the cell members 250.

The frame units 240, 210, and 230 made of the light transmissive resin material and the frame units 220 and 220 made of the light absorbing resin material adjacent in the stacking direction of the cell members 250 are joined at the welded portions 2700.

As a result, it is possible to reliably prevent electrolytic solution leakage out of the cells 280 by means of a simple seal structure.

In addition, since the frame units 240, 210, and 230 made of the light transmissive resin material and the frame units 220 and 220 made of the light absorbing resin material adjacent in the stacking direction of the cell members 250 are joined at the welded portions 270, higher airtightness is achieved than that of joining using an adhesive method, and electrolytic solution sealing performance can be further improved. Moreover, since the frame units 240, 210, and 230 made of the light transmissive resin material and the frame units 220 and 220 made of the light absorbing resin material are joined at the welded portions 270, burrs are less likely to be generated at a joining place, and a possibility that foreign matter such as burrs generated by joining enters the cells 280 can be avoided.

In addition, with the bipolar battery 200 according to the second embodiment, the frame units 240, 210, and 230 made of the light transmissive resin material include the joining surfaces 242a, 212a, and 232a extending along the stacking direction, and the frame units 220 and 220 made of the light absorbing resin material include the joining surfaces 222a and 222a extending along the stacking direction, the joining surfaces being joined at the welded portions 270.

As a result, the width W2 of each of the joining surfaces 242a, 212a, 232a, and 222a extending along the stacking direction can be made larger than the width W1 of each of the joining surfaces 112a, 122a, and 132a extending along the direction perpendicular to the stacking direction in the first embodiment, so that a creepage distance of the electrolytic solution leakage out of the cells 280 can be made larger than that in a case of the first embodiment, and the electrolytic solution sealing performance can be further improved. If the width W1 of each of the joining surfaces 112a, 122a, and 132a extending along the direction perpendicular to the stacking direction is made larger than the width W2 of each of the joining surfaces 242a, 212a, 232a, and 222a extending along the stacking direction, the bipolar battery increases in size in the direction perpendicular to the stacking direction, which is not suitable for miniaturization.

In addition, with the bipolar battery 200 according to the second embodiment, the resin component of the light transmissive resin material serving as the base material is the thermoplastic resin, and the resin component of the light absorbing resin material serving as the base material is the thermoplastic resin and contains the light absorbing agent. As a result, the frame units 240, 210, and 230 made of the light transmissive resin material, the resin component of the light transmissive resin material serving as the base material being the thermoplastic resin, and the frame units 220 and 220 made of the light absorbing resin material, the resin component of the light absorbing resin material serving as the base material being the thermoplastic resin and containing the light absorbing agent, are welded and joined together, and it is possible to reliably prevent the electrolytic solution leakage out of the cells 280 by means of the simple seal structure.

In addition, with the bipolar battery 200 according to the second embodiment, the light transmissive resin material uses as the base material the thermoplastic resin exhibiting the transmittance between 50% and 95% inclusive with respect to the light having the wavelength selected from the range between 380 nm and 2000 nm inclusive, and the light absorbing resin material contains the light absorbing agent in the thermoplastic resin as the base material so as to exhibit the absorbance between 5% and 60% inclusive with respect to the light having the wavelength selected from the range between 380 nm and 2000 nm inclusive. As a result, the frame units 240, 210, and 230 made of the light transmissive resin material using as the base material the thermoplastic resin exhibiting the transmittance between 50% and 95% inclusive with respect to the light having the wavelength selected from the range between 380 nm and 2000 nm inclusive, and the frame units 220 and 220 made of the light absorbing resin material containing the light absorbing agent in the thermoplastic resin as the base material so as to exhibit the absorbance between 5% and 60% inclusive with respect to the light having the wavelength selected from the range between 380 nm and 2000 nm inclusive, are welded and joined together, and it is possible to reliably prevent the electrolytic solution leakage out of the cells 280 by means of the simple seal structure.

In addition, with the bipolar battery 200 according to the second embodiment, the thermoplastic resin contains at least one of the acrylonitrile-butadiene-styrene resin or the polypropylene resin. As a result, the frame units 240, 210, and 230 made of the light transmissive resin material using as the base material the thermoplastic resin containing at least one of the acrylonitrile-butadiene-styrene resin or the polypropylene resin, and the frame units 220 and 220 made of the light absorbing resin material containing the light absorbing agent in the thermoplastic resin containing at least one of the acrylonitrile-butadiene-styrene resin or the polypropylene resin are welded and joined together, and it is possible to reliably prevent the electrolytic solution leakage out of the cells 280 by means of the simple seal structure.

In addition, the method of manufacturing the bipolar battery 200 according to the second embodiment of the present invention includes the frame unit arranging step of arranging the plurality of frame units (the first internal frame unit 210, the plurality of second internal frame units 220, the first end frame unit 230, and the second end frame unit 240) so as to cause the frame units 240, 210, and 230 made of the light transmissive resin material and the frame units 220 and 220 made of the light absorbing resin material to be alternately arranged in the stacking direction of the cell members 250. The method also includes the joining step of joining together at the welded portions 270 the frame units 240, 210, and 230 made of the light transmissive resin material and the frame units 220 and 220 made of the light absorbing resin material adjacent in the stacking direction of the cell members 250, the welded portions 270 being formed by emitting the laser beams to pass through the frame units 240, 210, and 230 made of the light transmissive resin material to the frame units 220 and 220 made of the light absorbing resin material, and by causing the frame units 220 and 220 made of the light absorbing resin material and the frame units 240, 210, and 230 made of the light transmissive resin material to be melted and solidified.

As a result, it is possible to reliably prevent electrolytic solution leakage out of the cells 280 by means of a simple seal method using laser welding and a simple seal structure.

In addition, by joining the frame units 240, 210, and 230 made of the light transmissive resin material and the frame units 220 and 220 made of the light absorbing resin material adjacent in the stacking direction of the cell members 250 at the welded portions 270 by laser welding, higher airtightness is achieved than that of joining using an adhesive method, and electrolytic solution sealing performance can be further improved. Moreover, by joining the frame units 240, 210, and 230 made of the light transmissive resin material and the frame units 220 and 220 made of the light absorbing resin material at the welded portions 270, burrs are less likely to be generated at a joining place, and a possibility that foreign matter such as burrs generated by joining enters the cells can be avoided.

In addition, with the method of manufacturing the bipolar battery 200 according to the second embodiment, in the joining step, the joining surfaces 42a, 212a, and 232a of the frame units 240, 210, and 230 made of the light transmissive resin material, the joining surfaces 42a, 212a, and 232a extending along the stacking direction, and the joining surfaces 222a and 222a of the frame units 220 and 220 made of the light absorbing resin material, the joining surfaces 222a and 222a extending along the stacking direction, are joined at the welded portions 270.

As a result, the width W2 of each of the joining surfaces 242a, 212a, 232a, and 222a extending along the stacking direction can be made larger than the width W1 of each of the joining surfaces 112a, 122a, and 132a extending along the direction perpendicular to the stacking direction in the first embodiment, so that a creepage distance of the electrolytic solution leakage out of the cells 280 can be made larger than that in a case of the first embodiment, and the electrolytic solution sealing performance can be further improved.

Although the embodiments of the present invention have been described above, the present invention is not limited thereto, and various modifications and improvements can be made therein.

For example, in the bipolar battery 100 according to the first embodiment, the two internal frame units 110 are provided. However, the number may be one or may be three or more.

In addition, in the bipolar battery 200 according to the second embodiment, the single first internal frame unit 210 is provided. However, the first internal frame unit does not have to be provided, or the number may be two or more.

In addition, in the bipolar battery 200 according to the second embodiment, the two second internal frame units 220 are provided. However, the number may be one or may be three or more. The number of second internal frame units 220 only needs to be larger than the number of first internal frame units 210 by one.

In addition, the electrical connection means provided in the substrates 111, 211, and 221 in the bipolar storage batteries 100 and 200 according to the first and second embodiments is not limited to a specific method. For example, opposite surfaces of the substrate may be electrically connected by causing the entire substrate to contain conductive particles or conductive fibers. A conductive member that enables electrical connection may also be incorporated in the substrate.

Moreover, in the method of manufacturing the bipolar battery 100 according to the first embodiment, the laser beams are emitted to pass through the frame units 130 and 110 made of the light transmissive resin material to the frame units 110 and 120 made of the light absorbing resin material. However, light other than the laser beam may be emitted to pass through the frame units 130 and 110 made of the light transmissive resin material to the frame units 110 and 120 made of the light absorbing resin material. The same applies to the method of manufacturing the bipolar battery 200 according to the second embodiment.

In addition, the bipolar battery 100 according to the first embodiment is the bipolar lead-acid battery in which the positive electrode 151 has the positive-electrode lead layer 101, and the negative electrode 152 has the negative-electrode lead layer 102. However, the bipolar battery may use a metal other than lead for the positive electrode 151 and the negative electrode 152. The same applies to the bipolar battery 200 according to the second embodiment.

### Industrial Applicability

Since the bipolar battery and the method of manufacturing the same according to the present invention can reliably prevent the electrolytic solution leakage out of the cell by means of the simple seal structure, both high energy density and long-term reliability can be achieved, and the bipolar battery and the method of manufacturing the same can be extremely advantageously used in various industries.

### Reference Signs List

100 bipolar battery
101 positive-electrode lead layer
102 negative-electrode lead layer
103 positive active material layer
104 negative active material layer
105 electrolyte layer
106 positive electrode terminal
107 negative electrode terminal
110 internal frame unit (frame unit made of a light transmissive resin material, frame unit made of a light absorbing resin material)
111 substrate (bipolar plate)
112 rim
112a joining surface
120 first end frame unit (frame unit made of a light absorbing resin material)
121 first end plate
122 rim
122a joining surface
130 second end frame unit (frame unit made of a light transmissive resin material)
131 second end plate
132 rim
132a joining surface
140 welded portion
150 cell member
151 positive electrode
152 negative electrode
160 cell (space incorporating a cell member)
200 bipolar battery
201 positive-electrode lead layer
202 negative-electrode lead layer
203 positive active material layer
204 negative active material layer
205 electrolyte layer
206 positive electrode terminal
207 negative electrode terminal
210 first internal frame unit (frame unit made of a
light transmissive resin material)
211 substrate (bipolar plate)
212 rim
212a joining surface
220 second internal frame unit (frame unit made of a light absorbing resin material)
221 substrate
222 rim
222a joining surface
230 first end frame unit (frame unit made of a light transmissive resin material)
231 first end plate
232 rim
232a joining surface
240 second end frame unit (frame unit made of a light transmissive resin material)
241 second end plate
242 rim
242a joining surface
250 cell member
261 positive electrode
262 negative electrode
270 welded portion
280 cell (space incorporating a cell member)

## Claims

1. A bipolar battery comprising: a plurality of cell members, each including a positive electrode having a positive active material layer, a negative electrode having a negative active material layer, and an electrolyte layer interposed between the positive electrode and the negative electrode; and a plurality of frame units respectively forming a plurality of cells respectively incorporating the plurality of cell members, cell members adjacent in a stacking direction being electrically connected in series, wherein
the plurality of frame units include a frame unit made of a light transmissive resin material and a frame unit made of a light absorbing resin material being alternately arranged in the stacking direction of the cell members, and
the frame unit made of a light transmissive resin material and the frame unit made of a light absorbing resin material adjacent in the stacking direction of the cell members are welded and joined together.

2. The bipolar battery according to claim 1,
wherein the frame unit made of a light transmissive resin material includes a joining surface extending along a direction perpendicular to the stacking direction, and the frame unit made of a light absorbing resin material includes a joining surface extending along the direction perpendicular to the stacking direction, the joining surfaces being welded and joined together.

3. The bipolar battery according to claim 1,
wherein the frame unit made of a light transmissive resin material includes a joining surface extending along the stacking direction, and the frame unit made of a light absorbing resin material includes a joining surface extending along the stacking direction, the joining surfaces being welded and joined together.

4. The bipolar battery according to any one of claims 1 to 3, wherein
a resin component of the light transmissive resin material serving as a base material is a thermoplastic resin, and
a resin component of the light absorbing resin material serving as a base material is a thermoplastic resin and contains a light absorbing agent.

5. The bipolar battery according to any one of claims 1 to 3, wherein
the light transmissive resin material uses as a base material a thermoplastic resin exhibiting a transmittance between 50% and 95% inclusive with respect to light having a wavelength selected from a range between 380 nm and 2000 nm inclusive, and
the light absorbing resin material contains a light absorbing agent in a thermoplastic resin as a base material, to exhibit an absorbance between 5% and 60% inclusive with respect to light having a wavelength selected from a range between 380 nm and 2000 nm inclusive.

6. The bipolar battery according to claim 4 or 5, wherein the thermoplastic resin contains at least one of an acrylonitrile-butadiene-styrene resin or a polypropylene resin.

7. The bipolar battery according to any one of claims 1 to 6, wherein the bipolar battery is a bipolar lead-acid battery in which the positive electrode has a positive-electrode lead layer and the negative electrode has a negative-electrode lead layer.

8. A method of manufacturing a bipolar battery, the bipolar battery including: a plurality of cell members, each including a positive electrode having a positive active material layer, a negative electrode having a negative active material layer, and an electrolyte layer interposed between the positive electrode and the negative electrode; and a plurality of frame units respectively forming a plurality of cells respectively incorporating the plurality of cell members, cell members adjacent in a stacking direction being electrically connected in series, the method comprising:
a frame unit arranging step of arranging the plurality of frame units to cause a frame unit made of a light transmissive resin material and a frame unit made of a light absorbing resin material to be alternately arranged in the stacking direction of the cell members; and
a joining step of joining together at a welded portion the frame unit made of a light transmissive resin material and the frame unit made of a light absorbing resin material adjacent in the stacking direction of the cell members, the welded portion being formed by emitting light to pass through the frame unit made of a light transmissive resin material to the frame unit made of a light absorbing resin material, and by causing the frame unit made of a light absorbing resin material and the frame unit made of a light transmissive resin material to be melted and solidified.

9. The method of manufacturing a bipolar battery according to claim 8, wherein in the joining step, a joining surface of the frame unit made of a light transmissive resin material, the joining surface extending along a direction perpendicular to the stacking direction, and a joining surface of the frame unit made of a light absorbing resin material, the joining surface extending along the direction perpendicular to the stacking direction, are joined at the welded portion.

10. The method of manufacturing a bipolar battery according to claim 8, wherein in the joining step, a joining surface of the frame unit made of a light transmissive resin material, the joining surface extending along the stacking direction, and a joining surface of the frame unit made of a light absorbing resin material, the joining surface extending along the stacking direction, are joined at the welded portion.
